# EUROPEAN PATENT APPLICATION

(11) **EP 3 144 176 A1**
(43) Date of publication of application: **22.03.2017**
(21) Application number: 15382456.0
(22) Date of filing: 21.09.2015
(51) Int. Cl.: B60L 11/18, G07F 15/00, H04L 9/32, B60L 3/12

(54) **SYSTEM FOR CONTROLLING AND MANAGING THE CHARGING OF ELECTRIC VEHICLES**

(71) Applicant: Fundacion Cartif, 47151 Boecillo (ES)
(72) Inventor: Olmos Herguedas, Francisco Javier, 47151 BOECILLO (VALLADOLID) (ES); Mediavilla Frechilla, Juan Carlos, 47151 BOECILLO (VALLADOLID) (ES); Baeyens Lázaro, Enrique, 47151 BOECILLO (VALLADOLID) (ES)
(74) Representative: Capitán García, Maria Nuria

(57) **Abstract**

System for controlling and managing the charging of electric vehicles comprising a device which in turn comprises a connector for connection to the power grid and a receiver for receiving a connector of the vehicle, where said device also comprises: a central module including a memory unit, a clock, a processor, charge measurement sensors and actuators; a module for wireless communication with an external device and a connection to the central module; a module for communication with the vehicle and a connection to the central module; and a charge control and management module, connected to the central module, such that the electric charge parameters are controlled and managed in a simple and economical manner.

## Description

### OBJECT OF THE INVENTION

The present invention relates to a system controlling and managing the charging of electric vehicles.

The system comprises a device which in turn comprises a connector for connection to the power grid and a receiver for receiving a connector of the vehicle, where said device also comprises: a central module including a memory unit, a clock, a processor, charge measurement sensors and actuators; a communications module for communication with an external device and a connection to the central module; a wireless communications module for communication with the vehicle and a connection to the central module; and a charge control and management module, connected to the central module, such that the electric charge parameters are controlled and managed in a simple and economical manner.

### BACKGROUND OF THE INVENTION

The use of electric vehicles by private users is becoming increasingly popular. Despite the known advantages of these vehicles, charging them is a problem as although the household power grid can be used, there are technical details that make this use inconvenient, since charging an electric vehicle requires several hours, with the resulting expense and use of the household power grid.

Aside from this, wireless devices and specifically smart phones and tablets are widely used. These are so popular that all modern applications must be manageable and checked on these devices in order to be successful in the market.

There are solutions for managing and controlling the charging of electric vehicles that consist in direct communication with the vehicle. These solutions focus on the safety of the charging process, and increase in cost according to the functionalities included. Most functionalities focus on providing external charge management systems, but do not handle vehicle information. There are other solutions that allow communicating with the vehicle. However, their compatibility is limited as they are physically present in the vehicle. Thus, no system is known with universality in an intermediate device external to the vehicle that manages communication with the vehicle, communicates with the user and has an external management system that is universal and independent of the vehicle.

Patent WO2011109460 discloses a system for controlling the charging of an electric vehicle that uses a mobile device such as a laptop computer to reserve a charging station at a given time using a web site. This is useful for public or shared charging stations, including the possibility of payment. When the vehicle approaches the charging station, a more portable mobile device such as a mobile telephone checks availability with the charging station. The charging station sends a certificate with the vehicle charging information. This invention is focussed on managing reservations of charging stations, but does not establish the management of charging parameters from the mobile device using information in data obtained from the vehicle, nor can it be used in a household environment.

Consequently, there is a need for a simple and inexpensive system that allows controlling and managing the charging parameters of an electric vehicle and manages the data on the charging, the vehicle, the user and the central station of the system itself.

### DESCRIPTION OF THE INVENTION

The present invention is established and characterised in the independent claims, while the dependent claims describe additional characteristics thereof.

The present invention relates to a simple and economical system that allows controlling and managing the charging parameters of an electric vehicle using an external device for communication with the elements of the system and with direct communication with the vehicle. The technical problem to solve is obtaining a system with the appropriate elements for achieving the aforementioned objective.

In view of the above, the present invention relates to a system for controlling and managing the charging of electrical vehicles, that is, allowing managing charging parameters such as the charging time, the connection time, the disconnection time, the selection of the period with the lowest rate, vehicle variables such as charge level, scheduling data from a central reservations or coordination system, etc.

The system comprises a device that in turn comprises a connector for connection to the power grid and a receiver for receiving a vehicle connector, as is standard in other systems.

The device is characterised in that it comprises:
- a central module comprising a memory unit, a clock, a processor, charge measurement systems and actuators, where these components are standard components such as a PCT board with a processor, internal clock and a memory, known sensors and actuators;
- a module for communication with an external device, comprising a data cable connection such as an RJ-45 connector, a wireless data receiver, and a connection to the central module, a physical connection, such that information is sent and received by the external device by wireless and/or physical means; this communication can also be defined as communication with the user, as the user will handle the external device, which can be mobile such as a mobile telephone, tablet or smart phone, with only wireless communication, or fixed, such as a personal computer with a fixed and/or wireless connection;
- a module for communications with the vehicle, comprising a wireless signal receiver and emitter, and a connection to the central module, a physical connection, such that information is sent to and received from the vehicle wirelessly;
- a charging control and management module, connected to the central module, such that it controls and manages the electric charging parameters and can include known elements for managing electric charging such as connectors, relays, etc.

The device can include other known suitable elements such as a cable winder, touch screen, control buttons, etc.

The system can also include network storage, commonly referred to as "cloud" storage. This is an optional element, since in the system the device connects at least to the vehicle, where it is possible to control and manage the charging.

One advantage of the system is that it does not require construction work in the building and provides a portable system.

Another advantage is that the vehicle has data on the charging and the charging system has data on the vehicle, that is, the charge of the vehicle batteries, allowing the optimisation of charging management according to such information, and implementation advanced functionalities such as battery diagnosis.

A further advantage is that including a mobile device provides access to the system anywhere, at any time.

### DESCRIPTION OF THE DRAWINGS

This specification is supplemented with a set of drawings illustrating the preferred embodiment, which are never intended to limit the invention.

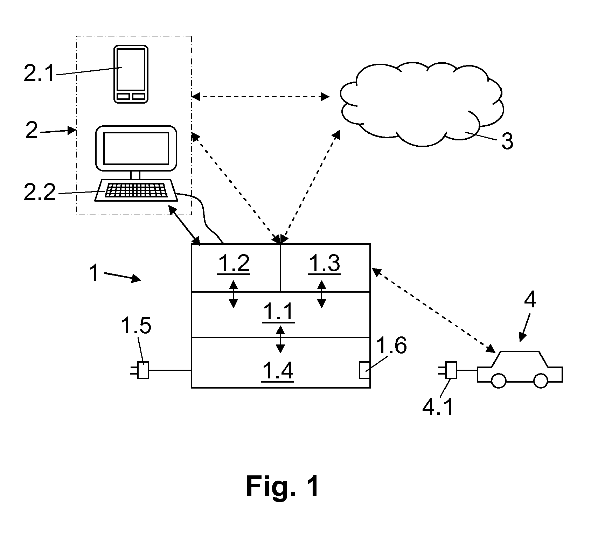

Figure 1 shows a schematic view of the system of the invention. Discontinuous double arrows represent wireless data flows, while continuous double arrows represent data flows through a physical connection.

### PREFERRED EMBODIMENT OF THE INVENTION

An embodiment of the invention is described below with reference to the figures.

Figure 1 shows a system for controlling and managing the charging of electric vehicles, comprising a device (1) that in turn comprises a connector (1.5) for connection to the power grid and a receiver (1.6) for receiving a connector (4.1) of the vehicle (4), which in turn comprises:
- a central module (1.1) comprising a memory unit, a clock, a processor, charge measurement sensors and actuators;
- a module (1.2) for communications with an external device, comprising a data cable connection, a wireless signal receiver and emitter and a connection to the central module (1.1), such that information is sent to and received from the external device (2);
- a module (1.3) for communications with the vehicle, comprising a wireless signal receiver and emitter, and a connection to the central module (1.1), such that information is sent to and received from the vehicle (4) wirelessly;
- a charging control and management module (1.4), connected to the central module (1.1) such that the former module controls and manages the electric charge parameters.

Optionally, the external device (2) comprises a mobile device (1.2) and/or a fixed device (2.2). In another option the system includes network storage (3).

Thus, the system allows the user to device intelligent charging policies using variables obtained from the four modules: timed charging (clock), charging according to battery charge thresholds (vehicle (4)), charging according to power limits (charge control), charging by external event (user), mixtures thereof, etc.

The proposed system provides the charging system with increased control.

In short, the system includes a flexible communications interface (Ethernet, Wifi, 3G,...) with the possibility of accessing using a mobile device (smart phone, computer, tablet, etc.) integrating protocols that guarantee routing, since the system is mobile (such as XMPP protocol, including specific functionalities for electric vehicle charging, such as incorporating specific protocols (for example, OCPP) and communication with the bus CAN of the vehicle via, for example, Bluetooth®.

The system described allows controlling and managing the charging with an intelligent policy considering variables obtained from the user, the vehicle (4) and the charge, that is, considering all possible variables, which no known system considers, thereby optimising charge management. Thus, for example, it is possible to perform timed charging using the clock, charging according to battery charge levels using communication with the vehicle (4), charging according to power limits, charging by external event entered by the user, or any combination thereof..

Consequently, information from all system elements is available and a greater control results in improved management, allowing to known accumulated consumption, battery state, estimated power costs, etc.

## Claims

1. System for controlling and managing the charging of electric vehicles, comprising a device (1) that in turn comprises a connector (1.5) for connection to the power grid and a receiver (1.6) for receiving a connector (4.1) of the vehicle (4), **characterised in that** said device (1) also comprises:
- a central module (1.1), comprising a memory unit, a clock, a processor, charge measurement sensors and actuators;
- a module (1.2)for communication with an external device, that comprises a connection for a data cable, a wireless data receiver and emitter and a connection to the central module (1.1), such that information is sent to and received from the external device (2);
- a module (1.3) for communication with the vehicle, comprising a wireless signal receiver and emitter and a connection to the central module (1.1), such that information is wirelessly sent to and received from the vehicle (4);
- a charging control and management module (1.4) connected to the central module (1.1), such that it controls and manages the electrical charge parameters.

2. System according to claim 1 where the external device (2) comprises a mobile device (2.1) and/or a fixed device (2.2).

3. System according to any of claims 1 or 2 that also comprises a network storage (3).

## Amended claims

### Amended claims in accordance with Rule 137(2) EPC.

1. System for controlling and managing the charging of electric vehicles, comprising a device (1) that in turn comprises a connector (1.5) for connection to a power grid and a receiver (1.6) for receiving a connector (4.1) of the vehicle (4), said device (1) also comprises:
- a central module (1.1), comprising a memory unit, a clock, a processor, charge measurement sensors and charge actuators;
- a module (1.2) for communication with an external device (2), that comprises a connection for a data cable, a wireless data receiver and emitter and a connection to the central module (1.1), such that information could be sent to and received from the external device (2);
**characterised in that** said device (1) also comprises:
- a module (1.3) for communication directly with the vehicle, comprising a wireless signal receiver and emitter and a connection to the central module (1.1), such that information could be wirelessly sent to and received from the vehicle (4);
- a charging control and management module (1.4) connected to the central module (1.1), such that it could control and manage the electrical charge parameters.

2. System according to claim 1 where the external device (2) comprises a mobile device (2.1) and/or a fixed device (2.2).

3. System according to any of claims 1 or 2 that also comprises a data network storage (3).
